# EUROPEAN PATENT SPECIFICATION

(11) **EP 1 529 704 B1**
(45) Date of publication and mention of the grant of the patent: **02.01.2008**
(21) Application number: 04105446.1
(22) Date of filing: 02.11.2004
(51) Int. Cl.: B60T 17/00, B01D 53/26

(54) **Method and device for controlling regulation, drying and regeneration of a regulator dryer unit in a pneumatic-hydraulic braking system of a vehicle**
Verfahren und Vorrichtung zur Regelung der Trocknung und Regenerierung einer Lufttrocknungseinheit in einem pneumatisch-hydraulischen Bremssystem eines Fahrzeuges
Procédé et dispositif pour contrôler la désiccation et la regénération d'un désiccateur dans un système de freinage pneumatique-hydraulique d'un véhicule

(30) Priority: 10.11.2003 IT MI20032156
(43) Date of publication of application: 11.05.2005
(73) Proprietor: IVECO S.p.A., 10156 Torino (IT)
(72) Inventor: Bezze, Massimo, 10080 San Benigno Canavese (IT); Biamino, Franco, 10095 Grugliasco (IT); Prina, Claudio, 13900 Biella (IT)
(74) Representative: Gervasi, Gemma

(56) References cited:
- EP-B- 0 808 756
- DE-A- 19 911 741
- US-A- 6 089 831

## Description

This invention relates to the field of vehicle braking control systems, and more precisely to a method and device for controlling regulation, drying and regeneration of regulator dryer unit in a pneumatic or pneumatic- hydraulic braking system of a vehicle.

According to the prior art, a pneumatic or pneumatic-hydraulic braking system of a vehicle comprises an air compressor that takes in atmospheric air and delivers the compressed air to a regulator dryer unit.

During the load phase the regulator dryer unit, after drying and filtering the air by means of the dryer cartridge, delivers the air to an air brake circuit and to an air suspension circuit, if incorporated in the vehicle, until the pressure downstream of the regulator dryer unit exceeds a cut-off value.

In a subsequent regeneration phase, when the cut-off pressure has been reached, the regulator dryer unit delivers the air to the discharge line and takes in air from the pneumatic brake circuit and/or the pneumatic suspension circuit to dry the dryer cartridge for a certain predefined time, or until the pressure downstream of the regulator dryer unit has fallen by a certain predefined amount.

During a subsequent off-load phase, which continues until the pressure downstream of the regulator dryer unit falls below a cut-in value (lower than the cut-off value) the air delivered by the compressor continues to flow to the discharge line, governed by an energy-saving system, without taking in air from the brake- or pneumatic suspension circuit.

When the pressure falls below the cut-in value, the load phase re-commences.

Such cut-in and cut-off values are fixed and depend on the calibration of the pneumatic valves.

In the conventional system that is described above the cut-in and cut-off pressure values and the duration of the regeneration phase cannot be altered, with the consequence that different components must be used according to the regeneration volumes that are required (for example 10 NI and 18 NI).

In fact in order to satisfy the requirements of the pneumatic brake system and pneumatic suspension system, it would be necessary to adjust the cut-in and cut-off pressure values and the pressure in the brake and suspension pneumatic circuits separately. Furthermore, the length of the regeneration phase should depend on the amount and humidity of the air that is taken in by the dryer during the load phase, but this is not possible using conventional systems.

During the load phase the compressor absorbs power from the engine that drives it and is thus a burden to the engine during the ignition cycle and when the engine is required to deliver more power to the wheels.

On the other hand, during engine braking, the power absorbed by the compressor during the load phase could be used to help to slow down the vehicle, but this is not the case in the prior art.

No cheap and simple method exists in the prior art for determining air humidity, which is a fundamental parameter for calculating the length of the regeneration phase.

Furthermore, conventional systems do not envisage filling the pneumatic suspension circuit only, for example to speed up levelling the vehicle platform.

US 6089831 discloses an air compressor, from whose outlet a supply line leads to an air drier for the purpose of supplying the compressed air system. On the outlet side of the air drier, the supply line branches into a plurality of line branches that lead to at least two consumer circuits. The pressure in the consumer circuits can be monitored by pressure sensors. Furthermore, control electronics are provided which are connected to the pressure sensors. The consumer circuits can be disconnected from the compressed air supply by a closing member that is disposed in the respective supply line branch and can be switched by the programmable control electronics. By means of this, the supply of compressed air into the consumer circuits and the withdrawal of compressed air for transfer from one circuit into the others can be controlled by the control electronics. The compressed air supply device can be used in the vehicle compressed air systems of commercial vehicles.

The purpose of the present invention is to overcome the drawbacks described above and to provide a method and a device for controlling regulation, drying and regeneration of a regulator dryer unit of a pneumatic or pneumatic-hydraulic braking system of a vehicle, that adjustably regulates the loading, regeneration and off-load phases according to the vehicle's operating conditions (demand for engine power, frequent braking, engine braking), according to the demand for air by the pneumatic suspension system and according to the air humidity level, and optimizes compressor energy consumption by means of the electro-pneumatic energy-saving system, in order to reduce the duration and frequency of dryer cartridge regeneration to a minimum.

The control system can be activated by means of solenoid valves to manage the load, regeneration and off-load phases and direct the flow of dry compressed air either to the air brake circuit or to the air suspension circuit.

To achieve said purposes this invention therefore refers to a method and device for controlling regulation, drying and regeneration of a regulator dryer unit in a pneumatic or pneumatic-hydraulic braking system of a vehicle, as described more fully in the claims, which are an integral part of this description.

The present invention achieves a number of fundamental advantages over the prior art.

The described invention allows, with respect to the known systems, improving both the effectiveness of regeneration and the energy consumption for compressing the air to be used in the pneumatic circuit.

Furthermore, the flexibility of the system means it can be adapted to suit the various air usage conditions, for example by reducing to a minimum the time required to fill the pneumatic suspension circuit in order to raise the load platform.

While ensuring compliance with the legal requirements for braking systems, the present invention can be used to obtain significant energy savings, in terms of a reduction in the amount of fuel used by the engine. This is achieved by optimizing the sequence of the operating phases, and rationalizing the regeneration process in order to guarantee an adequate flow of dry air to remove the build-up of water on the cartridge without any unnecessary waste of air.

Further purposes and advantages of this invention will become clear from the following detailed description of a preferred embodiment and the drawings that are attached hereto that are merely illustrative and not limitative, of which:
figure 1 is a block diagram of a pneumatic or pneumatic-hydraulic braking system of a vehicle provided with a control system according to the present invention;
figure 2 is an example of the graph showing the time t pressure P curve according to the present invention, during a normal cycle with the engine brake activated.

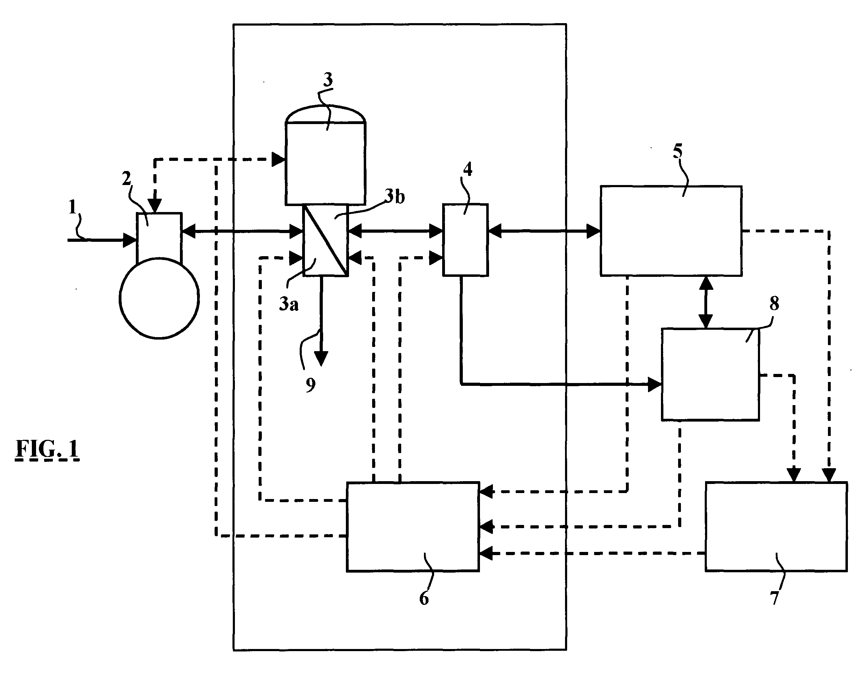

In fig. 1 the pneumatic or pneumatic-hydraulic braking system comprises an air compressor 2 that compresses the air taken in through the inlet port 1 and delivers it to a regulator dryer unit 3.

There is a discharge solenoid valve 3a, which delivers the air coming from the regulator dryer unit 3 to the discharge line 9, and a regeneration solenoid valve 3b, which takes in compressed air from the pneumatic circuits 5 and 8; the compressed air regenerates the dryer cartridge by passing through it in the opposite direction compared to the load phase, before being carried along the discharge line 9. The diverter valve 4 supplies the air to a pneumatic suspension circuit 8 and/or a pneumatic brake circuit 5, so that the two circuits can be filled separately.

When the drainage solenoid valve 3a is activated it opens/closes the connection between the delivery line of the compressor 2 upstream of the regulator dryer unit 3 and the discharge line 9.

When the regeneration solenoid valve 3b is activated it opens/closes the connection between the pressurized volume downstream of the regulator dryer unit 3 and the actual dryer to enable regeneration of the dryer cartridge. Finally, the diverter valve 4 directs the flow of compressed air from the regulator dryer unit 3 to the pneumatic brake circuit 5 and/or pneumatic suspension circuit 8.

The regulator dryer unit 3 is governed by a control module 6 that acquires information directly from the pneumatic brake circuit 5 and pneumatic suspension circuit 8 via pressure and humidity sensors, and also from an electronic system 7 for controlling the vehicle and the engine 7, from which it acquires signals relating to, for example: the number of engine revolutions; the power generated by the engine; engine braking; vehicle ignition or switching off; activation of the brake pedal; activation of the pneumatic suspension system or activation of other pneumatically-operated devices (servo-clutch for example) or devices that are indications of humidity (activation of the windscreen wipers, for example).

The control module 6 activates the solenoid valves 3a, 3b and the diverter valve 4, in order to manage the load, regeneration and off-load phases and direct the flow of dry compressed air to either the pneumatic brake circuit 5 or the pneumatic suspension circuit 8 or to both.

The air compressor 2, the regulator dryer unit 3, the solenoid valves 3a, 3b, the diverter valve 4, the pneumatic brake circuit 5, the pneumatic suspension circuit 8 and the electronic system 7 for controlling the engine and the vehicle 7 are of a type that is known in the prior art and are not described in detail here. The pneumatic brake circuit 5 and the air suspension circuit 8 are of the type equipped with pressure and humidity sensors, to send the relative signals to the control module. The electronic system 7 for controlling the engine and the vehicle is of the type capable of generating the signals described above and sending these to the control module 6.

The above described pneumatic or pneumatic-hydraulic braking system may be equipped with fastening or clamping devices for the pneumatic pipes which are integrated or not integrated in the system.

The procedure for controlling regulation, drying and regeneration of the regulator dryer unit 3 of the pneumatic brake system of a vehicle according to the present invention is hereinafter described. Such procedure consists of the following cyclic sequence of phases, governed by the control module 6.

In the first DATA INPUT phase, the control module 6 receives data concerning: the pressure in the separate pneumatic circuits, the number of engine revolutions, activation of the brake pedal, activation of pneumatically-operated devices (e.g.: the servo-clutch), engine braking, the power generated by the engine, activation of the pneumatic suspension system, the level of humidity measured by the sensors, activation of devices that are indications of humidity (windscreen wipers, air conditioner, heating). These data are generated by blocks 5, 7 and 8 in any way that is known in the prior art.

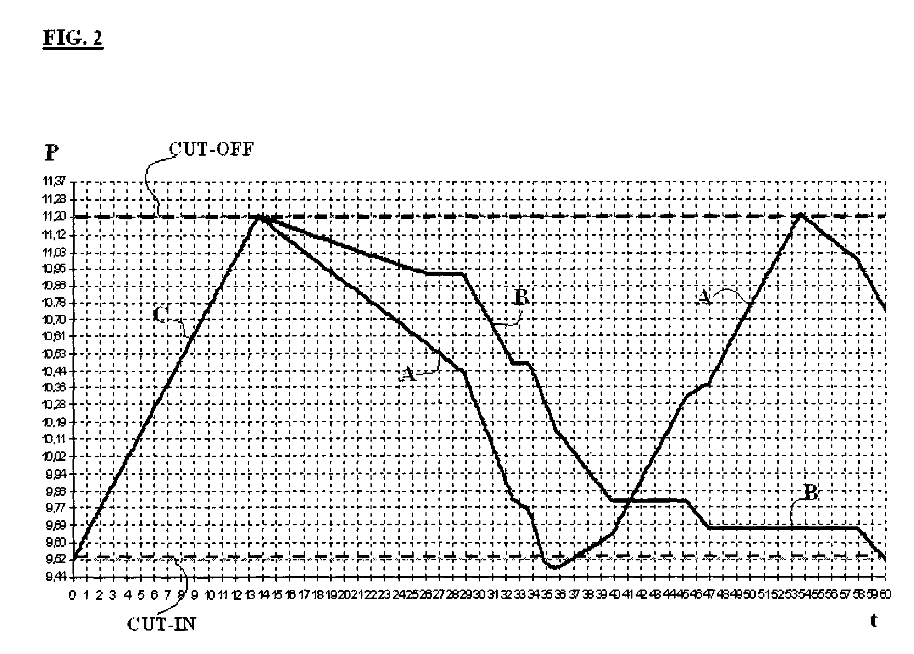

In the second POST-INPUT, PRE-LOAD phase, the following operations are performed by the control module:
- determination of the cut-off pressure according to the operating conditions (e.g.: activation of the pneumatic suspension system); typical cut-off value: 11 bar_{REL} (see fig. 2).
- reduction of the duration of the load phase in case of high engine power output, depending on the torque produced by the engine, consistently with the need to guarantee adequate pressure for the braking system.

Furthermore, in the ENGINE IGNITION phase, the control system may also govern the off-load operation of the compressor 2 during starting motor operation.

In a third COMPRESSOR LOAD phase, the control module 6 maintains the load phase of the compressor 2, for as long as the pressure in the pneumatic circuits does not exceed the cut-off pressure (which depends on the operating conditions, see typical pressure curve C in fig. 2); when the cut-off value is reached, the control module performs the following operations:
- it determines the pressure drop as a result of regeneration (regeneration Δp), which varies as a function of the air taken in during the load phase, the level of humidity measured by the sensors, the activation of devices that are indications of humidity (windscreen wipers, air conditioning, heating), activation of the brake pedal and of pneumatically-operated devices (e.g. the servo-clutch) during the load phase and actual regeneration);
- it makes an additional adjustment to the regeneration Δp on the basis of variations to the system taking into account the different types of vehicle and any changes that may have been made to the pneumatic system, for example to add a trailer, by means of the self-configuring and self-adaptive software (i.e. there is no need for initial or subsequent configuration of any parameters); typical values for regeneration Δp are 0.3 ÷ 0.4 bar (Δp depends on various parameters and may also vary as a function of modifications to the pneumatic system);
- it determines the number and frequency of regeneration phases (for example alternate instead of at each cycle) depending on initial pressure levels when loading the pneumatic circuits and humidity levels. When the circuit has been loaded for the first time after starting the vehicle, the system will execute a number of regeneration phases with a higher Δp than normal as a function of the pressure before loading the system and the level of humidity measured by the sensors (or determined on the basis of the activation of devices that are indications of humidity, such as windscreen wipers).

The COMPRESSOR LOAD phase is maintained for as long as possible in case of engine braking, in order to supplement braking with the power absorbed by the compressor.

In the fourth DRYER REGENERATION phase, the control module 6 maintains the regeneration phase until the pressure in the separate pneumatic circuits has dropped by the regeneration Δp (depending on the operating conditions); for example the graphs of the first parts of the curves A and B are illustrated in fig. 2.

The following operations are performed:
- determination of the cut-in pressure depending on the operating conditions (e.g.: activation of the pneumatic suspension system or high engine power output);
- additional adjustment of the cut-in pressure or elimination of the off-load phase in specific operating conditions (e.g. during engine braking), as shown in the example of curve A in fig. 2;

The cut-in pressure value is raised in certain conditions or in case of specific requirements, for example when the pneumatic suspension system is activated and the air supply to the pneumatic suspension circuit takes priority over that to the brake circuit, consistently with the need to guarantee the supply of adequate pressure to the pneumatic brake circuit as provided for by law.
- electronic activation of the compressor energy-saving system to reduce the energy consumed by the compressor during the off-load phase.

The REGENERATION phase may also be carried out in alternate cycles to satisfy environmental or economic requirements.

In the sixth COMPRESSOR OFF-LOAD phase, the control module 6 maintains the off-load phase until the pressure in the pneumatic circuits falls below the cut-in value (which depends on the operating conditions), as shown in the example of curve B in fig. 2.

Furthermore, the compressor off-load phase is maintained for as long as possible in case of high engine power output (which is typical of high speed phases), so that the power absorbed by the compressor does not obstruct the generation of power by the engine.

The compressor off-load phase is also maintained when the starting motor is operated.

The control module 6 also governs the execution of the following operations: AT EACH CYCLE:
- signalling and recording of any errors on the vehicle instrument panel in relation to heavy duty cycles or excessively long load phases, thus warning of potentially dangerous operating conditions for the compressor and any leaks from the pneumatic circuit.

IN CASE OF ACTIVATION OF THE AIR SUSPENSION SYSTEM to raise the vehicle load platform:
- loading of the pneumatic suspension circuit without loading the brake circuits (to speed up the response of the pneumatic suspension system)

### AFTER SWITCHING OFF:

- measurement of the air pressure in the brake circuit for the time that is necessary in order to define any excessive air consumption and leaks from the circuit;
- final regeneration for a time that depends on the pressure in the separate circuits before switching off to avoid the build-up of condensate when the vehicle is parked

### FINALLY IT RETURNS to the POST-INPUT, PRE-LOAD PHASE

The electro-pneumatic control system according to the present invention thus regulates the load, regeneration and off-load phases according to the vehicle's operating conditions (request for engine power, frequent braking, engine braking), the demand for air by the pneumatic suspension system and air humidity levels, and optimizes compressor energy consumption by means of the electro-pneumatic energy-saving system, in order to reduce the duration and frequency of dryer cartridge regeneration to a minimum.

*The energy-saving system always keeps the compressor intake valve open during the off-load phase to reduce the amount of power absorbed by the compressor to a minimum during this phase.*

The control system enables the following results to be achieved:
- it ensures the delivery of the correct air supply to the brake circuit and maintains the pressure in such circuit between the variable cut-in and cut-off pressure values during operation and the correct desiccation of the compressed air;
- it ensures efficiency of the regeneration phase, by establishing a proportionality with the same humidity conditions between the air used for regeneration and that passing through the dryer during the load phase, to avoid wasting air for regeneration when this is not necessary and increase the mass of regenerating air in case of particularly long load phases, taking into account the consumption of compressed air during the load or regeneration phase due to the use of the brakes or other pneumatically-controlled functions;
- it guarantees the appropriate duration of the regeneration phase as a function of air humidity, either directly by means of humidity sensors or by means of indirect signals, such as for example the activation of the windscreen wipers;
- it increases the difference between the cut-in and cut-off pressure values as much as possible so as to reduce the number of cycles, consistently with the minimum pressure values required in order to guarantee the minimum number of full brake applications as required by the law and the maximum values in view of the resistance of all parts of the circuit to overpressure;
- insofar as possible, it guarantees load phase operation in case of engine braking, using the power absorbed by the compressor to supplement the braking action ;
- insofar as possible it enables off-load operation in case of high engine power output, so that the power used by the compressor does not obstruct the generation of power by the engine, such as during high speed phases or acceleration, when the brakes are not generally used and there is little demand for compressed air;
- it performs a special regeneration phase the first time the system is loaded after ignition, when the first load phase after a prolonged standstill is usually long and thus requires an appropriate regeneration phase;
- it guarantees compressor off-load operation when the starting motor is used to start the engine in order to weigh as little as possible on the starting devices;
- it provides for an automatic regeneration phase when the engine is switched off, so that no condensate remains in the dryer while the vehicle is not running.

The method according to this invention can be implemented advantageously in a computer program, preferably resident in the control module 6, comprising program code means for performing one or more steps of said method, when said program is run on a computer. For this reason the scope of the present patent is meant to cover also said computer program and the computer-readable medium that comprises a recorded message, such computer-readable medium comprising the program code means for performing one or more steps of such method, when such program is run on a computer.

From the description set forth above it will be possible for the person skilled in the art to embody the invention with no need of describing further construction details.

## Claims

1. Device for controlling regulation, drying and regeneration of a regulator dryer unit (3) in a pneumatic or pneumatic-hydraulic braking system of a vehicle,
said braking system comprising an air compressor (2) that takes in atmospheric air;
a regulator dryer unit (3) that receives such compressed air and delivers it, after drying it and filtering it by means of a cartridge, to a pneumatic brake circuit (5) and/or a pneumatic suspension circuit (8),
said braking system comprising the following cyclic phases:
loading, which is maintained until the pressure exceeds a cut-off value, regeneration of the dryer cartridge, and off-load operation until the air pressure falls below a cut-in value,
**characterized by** comprising means for controlling the execution of said load, regeneration and off-load phases so that said cut-off and cut-in pressure values may vary according to the operating conditions, on the basis of input signals coming either from sensors on the vehicle or from electronic messages from the control system of the vehicle and of the engine (7), wherein said means for controlling comprises a control module (6).

2. Device according to claim 1, **characterized by** comprising means for controlling the execution of said load, regeneration and off-load phases in order to discharge the air delivered by the compressor (2), regenerate the dryer cartridge, divert the compressed air to the pneumatic suspension circuit (8).

3. Device according to claim 2, **characterized in that** said means for controlling the execution of such load, regeneration and off-load phases comprise:
a valve (3a) that opens/closes the connection between the compressor delivery line upstream of the dryer (3) and the discharge line (9);
a valve (3b) that opens/closes the connection between the pressurized volume downstream of the dryer (3) and the dryer in order to regenerate the dryer cartridge; and
a diverter valve (4) that directs the flow of compressed air leaving the dryer (3) to the brake pneumatic circuit (5) or to the suspension pneumatic circuit (8).

4. Device according to claim 1, **characterized in that** said input signals to the control module (6) include at least one of the following variables:
the number of engine revolutions; the air pressures in the braking system measured by sensors; driving of the brake pedal; driving of the clutch pedal; engine braking; the power generated by the engine; activation of the pneumatic suspension system; humidity levels measured by sensors.

5. Device according to claim 1, **characterized by** comprising means for determining said variable cut-off pressure value so that the duration of the load phase is parameterized according to the amount of engine torque requested and according to the activation of the pneumatic suspension system.

6. Device according to claim 1, **characterized by** comprising means for controlling the carrying out of said load phase until such variable cut-off pressure is achieved.

7. Device according to claim 6, **characterized by** comprising means for controlling the carrying out of said load phase in case of engine braking, in order to use the power absorbed by the compressor (2) to supplement the braking action.

8. Device according to claim 1, **characterized by** comprising means for controlling the carrying out of said regeneration phase in case of a pressure drop DELTA p in the brake pneumatic circuit (5), in relation to such cut-off value, determined in order to regenerate the cartridge with a mass of air that is proportional to the amount that passed through the dryer (3)during the load phase and variable during operation as a function of one or more of the following factors: the amount of compressed air that is used during the load and regeneration phases; the level of humidity measured by the sensors or frequency of activation of devices that are indications of humidity; and in any case for a fixed minimum regeneration time that depends on the pressure value at the beginning of the regeneration phase.

9. Device according to claim 1, **characterized by** comprising means for controlling the carrying out of said off-load phase in case of high engine power output so that the power absorbed by the compressor (2) does not obstruct the generation of power by the engine (7).

10. Device according to claim 1, **characterized by** comprising means that, after the first load phase following ignition, control the execution of a number of regeneration phases with a higher DELTA p than normal as a function of the pressure before loading the system and of the level of humidity.

11. Device according to claim 1, **characterized by** comprising means for controlling the carrying out of said off-load phase during the operation of the start motor.

12. Device according to claim 1, **characterized by** comprising means for controlling the duration of said regeneration phase when the engine (7) is switched off, depending on the pressure in the brake pneumatic circuit (5) when the engine is switched off.

13. Device according to claim 1, **characterized by** comprising means for determining the value of such cut-in pressure in order to raise such pressure when the pneumatic suspension system is activated and when the air supply to the pneumatic suspension circuit (8) takes priority over that to the brakes.

14. Device according to any of the preceding claims, **characterized by** comprising fastening or clamping means for pneumatic pipes which are integrated or not integrated in the said device.

15. Method for controlling regulation, drying and regeneration of a regulator dryer unit (3) in a pneumatic or pneumatic-hydraulic braking system of a vehicle,
said braking system comprising an air compressor (2) that takes in atmospheric air; a regulator dryer unit (3) that receives such compressed air and delivers it, after drying it and filtering it by means of a cartridge, to a brake pneumatic circuit (5) and/or an suspension pneumatic circuit (8),
said braking system comprising the following cyclic phases: loading, which is maintained until the pressure exceeds a cut-off value, regeneration of the dryer cartridge, and off-load operation until the air pressure falls below a cut-in value,
**characterized by** controlling the carrying out of said load, regeneration and off-load phases so that said cut-off and cut-in pressure values may vary according to the operating conditions, on the basis of input signals coming either from sensors on the vehicle or from electronic messages from the control system of the vehicle and of the engine(7).

16. Method according to claim 15, **characterized in that** said input signals comprise at least one of the following variables:
the number of engine revolutions; the air pressure in the braking system measured by sensors; activation of the brake pedal; activation of the clutch pedal; engine braking; the power generated by the engine; activation of the pneumatic suspension system; the level of humidity measured by sensors.

17. Device according to claim 15, **characterized in that** such variable cut-off pressure is determined so that the duration of the load phase is parameterized according to the amount of engine torque requested and according to the activation of the pneumatic suspension system.

18. Method according to claim 15, **characterized in that** such load phase is performed until said variable cut-off pressure is reached.

19. Method according to claim 18, **characterized in that** such load phase is carried out in case of engine braking, in order to use the power absorbed by the compressor (2) to supplement the braking power.

20. Method according to claim 15, **characterized in that** such regeneration phase is controlled according to a pressure drop DELTA p in the brake pneumatic circuit (5), in relation to such cut-off value, determined in order to regenerate the cartridge with a mass of air that is proportional to that which passed through the dryer (3) during the load phase and variable during operation as a function of one or more of the following factors: the amount of compressed air that is used during the load and regeneration phases; the level of humidity measured by the sensors or the frequency of activation of devices that are indications of humidity; and in any case for a fixed minimum regeneration time that depends on the pressure value at the beginning of the regeneration phase.

21. Method according to claim 15, **characterized in** fact that said off-load phase is carried out in case of high engine power output so that the power absorbed by the compressor (2) does not obstruct the generation of power by the engine (7).

22. Method according to claim 15, **characterized by** controlling, after the first load phase following ignition, the execution of a number of regeneration phases with a higher DELTA p than normal as a function of the pressure at the initial loading of the system and as a function of the level of humidity.

23. Method according to claim 15, **characterized in that** said off-load phase is performed during the operation of the starter motor.

24. Method according to claim 15, **characterized in that** said regeneration phase is carried out when the engine (7) is switched off, for a time that depends on the air pressure in the brake pneumatic circuit (5) when the engine (7) is switched off.

25. Method according to claim 15, **characterized in that** the value of such cut-in pressure is determined so as to raise said pressure when the pneumatic suspension system is activated and when the air supply to the pneumatic suspension circuit (8) takes priority over that to the brakes.

26. Method according to claim 15, **characterized by** detecting and recording excessively heavy duty cycles or excessively long load phases, thus allowing warning of potentially dangerous operating conditions for the compressor (2) and any leaks from the pneumatic circuit.

27. Method according to claim 15, **characterized by** electronically controlling an energy-saving system.

28. Method according to claim 15, **characterized in that** such regeneration phase is carried out in alternate cycles.

## Patentansprüche

1. Vorrichtung zum Steuern der Regulierung, des Entfeuchtens und der Regenerierung einer Regulator-Entfeuchtereinheit (3) in einem pneumatischen oder hydropneumatischen Bremssystem eines Fahrzeugs,
wobei das genannte Bremssystem umfasst: einen Luftkompressor (2), der Atmosphärenluft annimmt,
eine Regulator-Entfeuchtereinheit (3), die diese Druckluft empfängt und sie an einen pneumatischen Bremskreis (5) und/oder an einen pneumatischen Federungskreis (8) fördert, nachdem sie sie entfeuchtet und mittels eines Filtereinsatzes gefiltert hat,
wobei das genannte Bremssystem die folgenden zyklischen Phasen umfasst:
Belastung, die aufrechterhalten wird, bis der Druck einen Abschaltwert übersteigt; Regenerierung des Entfeuchter-Filtereinsatzes und entlasteter Betrieb, bis der Luftdruck unter einen Einschaltwert fällt,
**gekennzeichnet durch** Mittel, um die Ausführung der genannten Last-, Regenerierungs- und entlasteten Phase auf der Grundlage von Eingangssignalen, die entweder von Sensoren in dem Fahrzeug oder von elektronischen Nachrichten von dem Steuersystem des Fahrzeugs und des Motors (7) kommen, so zu steuern, dass der genannte Abschalt- und Einschaltdruckwert gemäß den Betriebsbedingungen variieren können, wobei die genannten Mittel zum Steuern ein Steuermodul (6) umfassen.

2. Vorrichtung gemäß Anspruch 1, **gekennzeichnet durch** Mittel, um die Ausführung der genannten Last-, Regenerierungs- und entlastete Phase so zu steuern, dass die durch den Kompressor (2) geförderte Luft ausströmen gelassen wird, der Entfeuchter-Filtereinsatz regeneriert wird und die Druckluft zu dem pneumatischen Federungskreis (8) abgeleitet wird.

3. Vorrichtung gemäß Anspruch 2, **dadurch gekennzeichnet, dass** die genannten Mittel, um die Ausführung dieser Last-, Regenerierungs- und entlasteten Phase zu steuern, Folgendes umfassen:
ein Ventil (3a), das die Verbindung zwischen der Kompressorförderleitung auf der Eingangsseite des Entfeuchters (3) und der Ausströmleitung (9) öffnet/schließt;
ein Ventil (3b), das die Verbindung zwischen dem mit Druck beaufschlagten Volumen auf der Ausgangsseite des Entfeuchters (3) und dem Entfeuchter öffnet/schließt, um den Entfeuchter-Filtereinsatz zu regenerieren; und
ein Ableitventil (4), das den Fluss der Druckluft, die den Entfeuchter (3) verlässt, zu dem pneumatischen Bremskreis (5) oder zu dem pneumatischen Federungskreis (8) lenkt.

4. Vorrichtung gemäß Anspruch 1, **dadurch gekennzeichnet, dass** die genannten Eingangssignale in das Steuermodul (6) wenigstens eine der folgenden Variablen enthalten:
die Motordrehzahl; die von Sensoren gemessenen Luftdrücke in dem Bremssystem; die Ansteuerung des Bremspedals; die Ansteuerung des Kupplungspedals; die Motorbremsung; die von dem Motor erzeugte Leistung; die Aktivierung des pneumatischen Federungssystems; den von Sensoren gemessenen Feuchtewert.

5. Vorrichtung gemäß Anspruch 1, **gekennzeichnet durch** Mittel, um den genannten variablen Abschaltdruckwert so zu bestimmen, dass die Dauer der Lastphase gemäß dem Betrag des angeforderten Motordrehmoments und gemäß der Aktivierung des pneumatischen Federungssystems parametrisiert wird.

6. Vorrichtung gemäß Anspruch 1, **gekennzeichnet durch** Mittel zum Steuern der Ausführung der genannten Lastphase, bis dieser variable Abschaltdruck erzielt wird.

7. Vorrichtung gemäß Anspruch 6, **gekennzeichnet durch** Mittel zum Steuern der Ausführung der genannten Lastphase im Fall der Motorbremsung, um die von dem Kompressor (2) aufgenommene Leistung zum Ergänzen der Bremswirkung zu verwenden.

8. Vorrichtung gemäß Anspruch 1, **gekennzeichnet durch** Mittel, um die Ausführung der genannten Regenerierungsphase im Fall eines Druckabfalls DELTA p in dem pneumatischen Bremskreis (5) in Bezug auf einen solchen Abschaltwert zu steuern, der so bestimmt wird, dass der Filtereinsatz mit einer Luftmasse, die während der Lastphase proportional zu der Menge ist, die **durch** den Entfeuchter (3) gegangen ist, und während des Betriebs als eine Funktion eines oder mehrerer der folgenden Faktoren variabel ist:
der Menge der Druckluft, die während der Last- und Regenerierungsphase verwendet wird; dem von den Sensoren gemessenen Feuchtewert oder der Häufigkeit der Aktivierung der Vorrichtungen, die Angaben der Feuchte sind; und in irgendeinem Fall für eine maximale Regenerierungszeit, die von dem Druckwert am Anfang der Regenerierungsphase abhängt, regeneriert wird.

9. Vorrichtung gemäß Anspruch 1, **gekennzeichnet durch** Mittel, um die Ausführung der genannten entlasteten Phase im Fall einer hohen Motorleistungsabgabe so zu steuern, dass die von dem Kompressor (2) aufgenommene Leistung die Erzeugung von Leistung **durch** den Motor (7) nicht behindert.

10. Vorrichtung gemäß Anspruch 1, **gekennzeichnet durch** Mittel, die nach der ersten Lastphase nach der Zündung die Ausführung einer Anzahl von Regenerierungsphasen als eine Funktion des Drucks vor der Belastung des Systems und des Feuchtewerts mit einem höheren DELTA p als normal steuern.

11. Vorrichtung gemäß Anspruch 1, **gekennzeichnet durch** Mittel zum Steuern der Ausführung der genannten entlasteten Phase während des Betriebs des Startmotors.

12. Vorrichtung gemäß Anspruch 1, **gekennzeichnet durch** Mittel, um die Dauer der genannten Regenerierungsphase, wenn der Motor (7) abgeschaltet ist, je nach dem Druck in dem pneumatischen Bremskreis (5), wenn der Motor abgeschaltet ist, zu steuern.

13. Vorrichtung gemäß Anspruch 1, **gekennzeichnet durch** Mittel zum Bestimmen des Werts dieses Einschaltdrucks, um diesen Druck anzuheben, wenn das pneumatische Federungssystem aktiviert wird und wenn die Luftzufuhr zu dem pneumatischen Federungskreis (8) gegenüber der zu den Bremsen Priorität erlangt.

14. Vorrichtung gemäß einem vorherigen Anspruch, **gekennzeichnet durch** Befestigungs- oder Klemmmittel für Druckluftrohre, die in die genannte Vorrichtung integriert oder nicht integriert sind.

15. Verfahren zum Steuern der Regulierung, des Entfeuchtens und der Regenerierung einer Regulator-Entfeuchtereinheit (3) in einem pneumatischen oder hydropneumatischen Bremssystem eines Fahrzeugs,
wobei das genannte Bremssystem umfasst: einen Luftkompressor (2), der Atmosphärenluft annimmt; eine Regulator-Entfeuchtereinheit (3), die diese Druckluft empfängt und sie an einen pneumatischen Bremskreis (5) und/oder an einen pneumatischen Federungskreis (8) fördert, nachdem sie sie entfeuchtet und mittels eines Filtereinsatzes gefiltert hat,
wobei das genannte Bremssystem die folgenden zyklischen Phasen umfasst: Belastung, die aufrechterhalten wird, bis der Druck einen Abschaltwert übersteigt; Regenerierung des Entfeuchter-Filtereinsatzes und entlasteter Betrieb, bis der Luftdruck unter einen Einschaltwert fällt,
**dadurch gekennzeichnet, dass** die Ausführung der genannten Last-, Regenerierungs- und entlasteten Phase auf der Grundlage von Eingangssignalen, die entweder von Sensoren in dem Fahrzeug oder von elektronischen Nachrichten von dem Steuersystem des Fahrzeugs und des Motors (7) kommen, so gesteuert werden, dass der genannte Abschalt- und Einschaltdruckwert gemäß den Betriebsbedingungen variieren können.

16. Verfahren gemäß Anspruch 15 **dadurch gekennzeichnet, dass** die genannten Eingangssignale wenigstens eine der folgenden Variablen umfassen:
die Motordrehzahl; den von Sensoren gemessenen Luftdruck in dem Bremssystem; die Aktivierung des Bremspedals; die Aktivierung des Kupplungspedals; die Motorbremsung; die von dem Motor erzeugte Leistung; die Aktivierung des pneumatischen Federungssystems; den von Sensoren gemessenen Feuchtewert.

17. Vorrichtung gemäß Anspruch 15, **dadurch gekennzeichnet, dass** dieser variable Abschaltdruck so bestimmt wird, dass die Dauer der Lastphase gemäß dem Betrag des angeforderten Motordrehmoments und gemäß der Aktivierung des pneumatischen Federungssystems parametrisiert wird.

18. Verfahren gemäß Anspruch 15, **dadurch gekennzeichnet, dass** diese Lastphase ausgeführt wird, bis der genannte variable Abschaltdruck erreicht wird.

19. Verfahren gemäß Anspruch 18, **dadurch gekennzeichnet, dass** diese Lastphase im Fall der Motorbremsung ausgeführt wird, um die von dem Kompressor (2) aufgenommene Leistung zum Ergänzen der Bremsleistung zu verwenden.

20. Verfahren gemäß Anspruch 15, **dadurch gekennzeichnet, dass** diese Regenerierungsphase gemäß einem Druckabfall DELTA p in dem pneumatischen Bremskreis (5) in Bezug auf einen solchen Abschaltwert gesteuert wird, der so bestimmt wird, dass der Filtereinsatz mit einer Luftmasse, die während der Lastphase proportional zu der ist, die durch den Entfeuchter (3) gegangen ist, und während des Betriebs als eine Funktion eines oder mehrerer der folgenden Faktoren variabel ist: der Menge der Druckluft, die während der Last- und Regenerierungsphase verwendet wird; dem von den Sensoren gemessenen Feuchtewert oder der Häufigkeit der Aktivierung der Vorrichtungen, die Angaben der Feuchte sind; und in irgendeinem Fall für eine maximale Regenerierungszeit, die von dem Druckwert am Anfang der Regenerierungsphase abhängt, regeneriert wird.

21. Verfahren gemäß Anspruch 15, **gekennzeichnet durch** die Tatsache, dass die genannte entlastete Phase im Fall einer hohen Motorleistungsabgabe so ausgeführt wird, dass die von dem Kompressor (2) aufgenommene Leistung die Erzeugung von Leistung **durch** den Motor (7) nicht behindert.

22. Verfahren gemäß Anspruch 15, **dadurch gekennzeichnet, dass** nach der ersten Lastphase nach der Zündung die Ausführung einer Anzahl von Regenerierungsphasen als eine Funktion des Drucks bei der Anfangsbelastung des Systems und als eine Funktion des Feuchtewerts mit einem höheren DELTA p als normal gesteuert wird.

23. Verfahren gemäß Anspruch 15, **dadurch gekennzeichnet, dass** die genannte entlastete Phase während des Betriebs des Anlassermotors ausgeführt wird.

24. Verfahren gemäß Anspruch 15, **dadurch gekennzeichnet, dass** die genannte Regenerierungsphase, wenn der Motor (7) abgeschaltet ist, für eine Zeit ausgeführt wird, die von dem Luftdruck in dem pneumatischen Bremskreis (5), wenn der Motor (7) abgeschaltet ist, abhängt.

25. Verfahren gemäß Anspruch 15, **dadurch gekennzeichnet, dass** der Wert dieses Einschaltdrucks so bestimmt wird, dass der genannte Druck angehoben wird, wenn das pneumatische Federungssystem aktiviert wird und wenn die Luftzufuhr zu dem pneumatischen Federungskreis (8) gegenüber der zu den Bremsen Priorität erlangt.

26. Verfahren gemäß Anspruch 15, **dadurch gekennzeichnet, dass** Zyklen übermäßig hoher Leistung oder übermäßig lange Lastphasen erfasst und aufgezeichnet werden, was somit die Warnung vor potentiell gefährlichen Betriebsbedingungen für den Kompressor (2) und vor irgendwelchen Lecks aus dem Pneumatikkreis ermöglicht.

27. Verfahren gemäß Anspruch 15, **dadurch gekennzeichnet, dass** ein Energiesparsystem elektronisch gesteuert wird.

28. Verfahren gemäß Anspruch 15, **dadurch gekennzeichnet, dass** diese Regenerierungsphase in jedem zweiten Zyklus ausgeführt wird.

## Revendications

1. Dispositif de contrôle de régulation, de séchage et de régénération d'une unité de séchage de régulateur (3) dans un système de freinage pneumatique ou pneumatique-hydraulique d'un véhicule,
ledit système de freinage comprenant un compresseur d'air (2) qui absorbe de l'air atmosphérique ;
une unité (3) de séchage de régulateur qui reçoit un tel air compressé et le distribue, après l'avoir séché et filtré par le biais d'une cartouche, dans un circuit de freinage (5) pneumatique et/ou dans un circuit de suspension pneumatique (8),
ledit système de freinage comprenant les phases cycliques suivantes :
le chargement qui est maintenu jusqu'à ce que la pression dépasse une valeur de coupure, la régénération de la cartouche de séchage, et l'opération de décharge jusqu'à ce que la pression de l'air tombe en dessous d'une valeur de reprise, **caractérisé par le fait qu'**il comprend un moyen pour contrôler l'exécution de ladite charge, régénération et phases de décharge de manière à ce que ladite pression de coupure et de reprise puisse varier selon les conditions de fonctionnement, sur la base des signaux d'entrée venant soit des capteurs sur le véhicule ou des messages électroniques depuis le système de contrôle du véhicule et du moteur (7), dans lequel ledit moyen pour contrôler comprend un module (6) de contrôle.

2. Dispositif selon la revendication 1, **caractérisé en ce qu'**il comprend un moyen pour contrôler l'exécution de ladite charge, régénération et phases de décharge afin de décharger l'air distribué par le compresseur (2), de régénérer la cartouche de séchage, d'écarter l'air compressé dans le circuit de suspension pneumatique (8).

3. Dispositif selon la revendication 2, **caractérisé en ce que** ledit moyen pour contrôler l'exécution d'une telle charge, régénération et phases de décharge comprend :
une soupape (3a) qui ouvre/ferme la connexion entre la conduite d'alimentation du compresseur en amont du séchoir (3) et la conduite d'évacuation (9) ;
une soupape (3b) qui ouvre/ferme la connexion entre le volume pressurisé en aval du séchoir (3) et le séchoir afin de régénérer la cartouche du séchoir ; et
une soupape de dérivation (4) qui dirige le flux d'air compressé quittant le séchoir (3) dans le circuit pneumatique de freinage (5) ou dans le circuit de suspension pneumatique (8).

4. Dispositif selon la revendication 1, **caractérisé en que** lesdits signaux d'entrée dans le module de contrôle (6) comprennent au moins une des variables suivantes :
le nombre de révolutions du moteur ; les pressions d'air dans le système de freinage mesurées par des capteurs ; l'entraînement de la pédale de frein ; l'entraînement de la pédale de débrayage ; le freinage moteur ; la puissance générée par le moteur ; l'activation du système de suspension pneumatique ; les niveaux d'humidité mesurés par des capteurs.

5. Dispositif selon la revendication 1, **caractérisé en ce qu'**il comprend un moyen pour déterminer ladite valeur de pression de coupure variable afin que la durée de la phase de charge soit paramétrée selon le volume du couple demandé au moteur et selon l'activation du système de suspension pneumatique.

6. Dispositif selon la revendication 1, **caractérisé en ce qu'**il comprend un moyen pour contrôler la mise en oeuvre de ladite phase de charge jusqu'à ce qu'une telle pression de coupure variable soit obtenue.

7. Dispositif selon la revendication 6, **caractérisé en ce qu'**il comprend un moyen pour contrôler la mise en oeuvre de ladite phase de charge en cas de freinage moteur, afin d'utiliser la puissance absorbée par le compresseur (2) pour compléter l'action du freinage.

8. Dispositif selon la revendication 1, **caractérisé en ce qu'**il comprend un moyen pour contrôler la mise en oeuvre de ladite phase de régénération en cas d'une chute de pression DELTA p dans le circuit pneumatique de freinage (5), par rapport à une telle valeur de coupure, déterminée afin de régénérer la cartouche avec une masse d'air qui est proportionnelle au volume qui traverse le séchoir (3) au cours de la phase de charge et la variable au cours du fonctionnement en tant que fonction d'un ou plusieurs des facteurs suivants : le volume de l'air compressé qui est utilisé durant la charge et les phases de régénération ; le niveau d'humidité mesuré par les capteurs ou la fréquence d'activation des dispositifs qui sont des indications de l'humidité ; et dans tous les cas pour un temps de régénération minimum fixé qui dépend de la valeur de la pression au moment de la phase de régénération.

9. Dispositif selon la revendication 1, **caractérisé en ce qu'**il comprend un moyen de contrôler la mise en oeuvre de ladite phase de décharge en cas de sortie de puissance moteur élevée de manière à ce que la puissance absorbée par le compresseur (2) n'obstrue pas la génération de puissance par le moteur (7).

10. Dispositif selon la revendication 1, **caractérisé en ce qu'**il comprend un moyen qui, après la première phase de charge suivant l'allumage, contrôle l'exécution d'un nombre de phases de régénération avec un DELTA p supérieur à la normale en tant que fonction de la pression avant chargement du système et du niveau d'humidité.

11. Dispositif selon la revendication 1, **caractérisé en ce qu'**il comprend un moyen pour contrôler la mise en oeuvre de ladite phase de décharge durant le fonctionnement du moteur de démarrage.

12. Dispositif selon la revendication 1, **caractérisé en ce qu'**il comprend un moyen pour contrôler la durée de ladite phase de régénération quand le moteur (7) est éteint, selon la pression dans le circuit pneumatique de freinage (5) quand le moteur est éteint.

13. Dispositif selon la revendication 1, **caractérisé en ce qu'**il comprend un moyen pour déterminer la valeur d'une telle pression de reprise afin de relever une telle pression quand le système de suspension pneumatique est activé et quand l'alimentation en air dans le circuit de suspension pneumatique (8) prend la priorité sur celui des freins.

14. Dispositif selon l'une quelconque des revendications précédentes, **caractérisé en ce qu'**il comprend un moyen de fixation ou de serrage pour des tuyaux pneumatiques qui sont intégrés ou non intégrés dans ledit dispositif.

15. Procédé pour contrôler la régulation, le séchage et la régénération d'une unité (3) de séchage du régulateur dans un système de freinage pneumatique et pneumatique-hydraulique d'un véhicule,
ledit système de freinage comprenant un compresseur (2) d'air qui absorbe de l'air atmosphérique; une unité (3) de séchage de régulateur qui reçoit un tel air compressé et le distribue, après l'avoir séché et filtré, par le biais d'une cartouche dans un circuit pneumatique de freinage (5) et/ou un circuit de suspension pneumatique (8),
ledit système de freinage comprenant les phases cycliques suivantes : le chargement qui est maintenu jusqu'à ce que la pression dépasse une valeur de coupure, la régénération de la cartouche de séchage, et l'opération de décharge jusqu'à ce que la pression de l'air tombe en dessous d'une valeur de reprise, **caractérisé en ce qu'**il contrôle la mise en oeuvre de ladite charge, régénération et phases de décharge de manière à ce que ladite pression de coupure et de reprise puissent varier selon les conditions de fonctionnement, sur la base des signaux d'entrée venant soit des capteurs sur le véhicule soit des messages électroniques depuis le système de contrôle du véhicule et du moteur (7).

16. Procédé selon la revendication 15, **caractérisé en ce que** lesdits signaux d'entrée comprennent au moins une des variables suivantes :
le nombre de révolutions du moteur ; la pression de l'air dans le système de freinage mesurée par des capteurs; l'activation de la pédale de frein ; l'activation de la pédale de débrayage ; le freinage moteur ; la puissance générée par le moteur ; l'activation du système de suspension pneumatique ; le niveau d'humidité mesuré par des capteurs.

17. Dispositif selon la revendication 15, **caractérisé en ce qu'**une telle pression de coupure variable est déterminée de manière à ce que la durée de la phase de charge soit paramétrée selon le volume du couple demandé du moteur et selon l'activation du système de suspension pneumatique.

18. Procédé selon la revendication 15, **caractérisé en ce qu'**une telle phase de charge est réalisée jusqu'à ce que ladite pression de coupure variable soit atteinte.

19. Procédé selon la revendication 18, **caractérisé en ce qu'**une telle phase de charge est mise en oeuvre en cas de freinage moteur afin d'utiliser la puissance absorbée par le compresseur (2) pour compléter la puissance de freinage.

20. Procédé selon la revendication 15, **caractérisé en ce qu'**une telle phase de régénération est contrôlée selon une chute de pression DELTA p dans le circuit pneumatique de freinage (5), par rapport à une telle valeur de coupure, déterminée afin de régénérer la cartouche avec une masse d'air qui est proportionnelle à celle qui traverse le séchoir (3) au cours de la phase de charge et la variable au cours du fonctionnement en tant que fonction d'un ou plusieurs des facteurs suivants : le volume d'air compressé qui est utilisé durant la charge et les phases de régénération ; le niveau d'humidité mesuré par les capteurs ou la fréquence d'activation des dispositifs qui sont des indications de l'humidité ; et dans tous les cas pour un temps de régénération minimum fixé qui dépend de la valeur de la pression au début de la phase de régénération.

21. Procédé selon la revendication 15, **caractérisé** selon le fait que ladite phase de décharge est mise en oeuvre en cas de sortie de puissance du moteur élevée de manière à ce que la puissance absorbée par le compresseur (2) n'obstrue pas la génération de puissance par le moteur (7).

22. Procédé selon la revendication 15, **caractérisé en ce qu'**il contrôle après la première phase de charge suivant l'allumage, l'exécution d'un nombre de phases de régénération avec un DELTA p plus élevé que la normale en tant que fonction de la pression au niveau du chargement initial du système et en tant que fonction du niveau d'humidité.

23. Procédé selon la revendication 15, **caractérisé en ce que** ladite phase de décharge est réalisée au cours de l'allumage du démarreur.

24. Procédé selon la revendication 15, **caractérisé en ce que** ladite phase de régénération est mise en oeuvre quand le moteur (7) est éteint, pour une durée qui dépend de la pression de l'air dans le circuit pneumatique de freinage (5) quand le moteur (7) est éteint.

25. Procédé selon la revendication 15, **caractérisé en ce que** la valeur d'une telle pression de reprise est déterminée de manière à relever ladite pression quand le système de suspension pneumatique est activé et quand l'alimentation en air dans le circuit de suspension pneumatique (8) prend la priorité sur les freins.

26. Procédé selon la revendication 15, **caractérisé en ce qu'**il détecte et enregistre des cycles de travail excessivement lourds ou des phases de charge excessivement longues, permettant ainsi d'alerter des conditions de fonctionnement potentiellement dangereuses pour le compresseur (2) et toutes fuites provenant du circuit pneumatique.

27. Procédé selon la revendication 15, **caractérisé en ce qu'**il contrôle de manière électronique un système d'économie d'énergie.

28. Procédé selon la revendication 15, **caractérisé en ce qu'**une telle phase de régénération est mise en oeuvre dans des cycles alternés.
